Europäisches Patentamt

European Patent Office

Office européen des brevets

(11) Veröffentlichungsnummer: **0 264 594 B1**

(12) **EUROPÄISCHE PATENTSCHRIFT**

(45) Veröffentlichungstag der Patentschrift: **15.01.92**

(21) Anmeldenummer: **87112644.7**

(22) Anmeldetag: **29.08.87**

(51) Int. Cl.⁵: **B01D 65/00**, B01D 71/02, C25D 1/08

(54) **Einrichtung zur Abstützung einer metallischen Mikrofilterfolie.**

(30) Priorität: **23.10.86 CH 42226/86**

(43) Veröffentlichungstag der Anmeldung:
**27.04.88 Patentblatt 88/17**

(45) Bekanntmachung des Hinweises auf die Patenterteilung:
**15.01.92 Patentblatt 92/03**

(84) Benannte Vertragsstaaten:
**AT BE CH DE FR GB IT LI NL SE**

(56) Entgegenhaltungen:
**DE-B- 1 202 610**
**FR-A- 835 984**

(73) Patentinhaber: **GEBRÜDER SULZER AKTIENGE-SELLSCHAFT**
**Zürcherstrasse 9**
**CH-8401 Winterthur(CH)**

(72) Erfinder: **Ehrsam, Christian, Dr.**
**Köhlbergstrasse 8**
**CH-8400 Winterthur(CH)**

## Beschreibung

Die Erfindung betrifft eine Einrichtung zur Abstützung einer metallischen Mikrofilterfolie gemäss Oberbegriff von Anspruch 1.

Eine solche Einrichtung ist, z.B., aus der Schrift DE-B-1 202 610 bekannt.

Derartige Mikrofilterfolien sind sogenannte Oberflächen-oder Siebfilter, die sich als Filtermedium für Querstromfiltration eignen. Da bei diesen Verfahren sich kein Filterkuchen auf dem Filtermedium absetzt, ist eine kontinuierliche Filtration möglich. Die Poren dieser Mikrofilterfolie können kleiner sein als Bakterien, deren Zellgrössen mindestens 0,2 um beträgt. Daher ist eine kontinuierliche Entkeimungsfiltration möglich.

Ein vorteilhaftes Herstellungsverfahren zur Erzeugung derartiger Mikrofilterfolien wird beispielsweise in dem schweizerischen Patentgesuch 02 945/86 beschrieben. Dieses Patentgesuch entspricht der zum Stand der Technik im Sinne von Art. 54(3) EPü gehörenden europäischen Patentanmeldung EP-A-0 254 103 (Priorität: 23.07.86; Veröffentlichungstag: 27.01.88). Hiernach wird ein abgewandeltes photolithografisches Verfahren eingesetzt. Unter Verwendung eines Lasers, mit dem ein Interferenzmuster erzeugt wird, erhält man eine lichtempfindliche Lackschicht mit einer rasterartigen Oberflächenstruktur. Zwei weitere Verfahrensschritte, wie Kathodenzerstäubung und Polieren, führen zu einer dünnen, regelmässig perforierten Metallhaut.

Die Folie kann z.B. aus Gold, Nickel oder Titan oder aus einer Legierung, beispielsweise aus Gold und Palladium bestehen.

Derartige Mikrofilterfolien sind äusserst empfindliche Gebilde, und es ist daher erforderlich, diese mit einer Stützstruktur zu verstärken, bevor sie auf einen Filterträger aufgebracht und in einer Filtriereinrichtung eingesetzt werden.

Die Erfindung hat sich eine Ausbildung einer Stützstruktur für Mikrofilterfolien zum Ziel gesetzt, die eine grosse Fläche der Mikrofilterfolie durchlässig lässt und die trotzdem äusserst stabil ist.

Diese Aufgabe wird mit Hilfe der im Kennzeichen des Anspruchs 1 angegebenen Merkmale gelöst.

Vorteilhafte Ausführungsformen der Erfindung sind in den Ansprüchen 2 bis 11 angegeben.

Zur Herstellung der galvanoplastischen Verstärkung wird das Gebilde zu einer Elektrode (Kathode) präpariert.

Geht man beispielsweise von einer Mikrofilterfolie aus, wie sie im vorstehend erwähnten schweizerischen Patentgesuch 02 945/86 beschrieben ist, so befindet sich die erzeugte Mikrofilterfolie auf einem Substrat, z.B. einer Glasplatte, wobei zwischen Glasplatte und Folie sich noch lichtempfindlicher Lack befindet. Man kann sodann auf die Oberfläche der Mikrofilterfolie eine Schicht aus Leitlack, welcher fein verteilte Metallteilchen enthält, aufbringen. Anschliessend kann man die so mit Leitlack verstärkte Mikrofilterfolie von der Glasplatte entfernen, indem man ein Lösungsmittel, das selektiv nur den lichtempfindlichen Lack, nicht aber den Leitlack löst, durch die poröse Leitlackschicht diffundieren lässt. Ein solches selektives Lösungsmittel ist beispielsweise die Entwicklerlösung des lichtempfindlichen Lackes.

Nach dem Auflösen des lichtempfindlichen Lackes lässt sich die Mikrofilterfolie auf einen metallischen Galvanikträger übertragen, wozu dieser auf die Mikrofilterfolie, die sich noch auf der Glasplatte befindet, aufgelegt wird. De Glasplatte wird in Längsrichtung abgezogen, und die Mikrofilterfolie befindet sich nun mit nach oben gerichteter, freiliegender Rückseite auf dem Galvanikträger.

Sodann kann die Mikrofilterfolie auf dem Galvanikträger mittels Vakuum angesaugt und fixiert werden, so dass die Folie glatt auf der Oberfläche des Galvanikträgers anliegt.

Anschliessend kann die freigelegte Rückseite der Mikrofilterfolie zur Herstellung der ersten Schicht mit einem lichtempfindlichen Lack beschichtet werden.

In dieser Lackschicht werden Flächen freigelegt, die bei der galvanischen Beschichtung die Kontaktstellen ergeben, an denen die erste Schicht an der Mikrofilterfolie anwächst.

Zur Herstellung des Kontaktstellenmusters kann eine entsprechend präparierte Maske verwendet werden. Die Maske kann aus einer Glasplatte bestehen, deren Oberfläche stellenweise mit einer lichtundurchlässigen Schicht z.B. aus Chrom bedeckt ist.

Nach Belichtung wird die Platte in bekannter Weise entwickelt, wobei sich der Fotolack an den belichteten Stellen, die den Kontaktstellen entsprechen, auflöst.

Nun kann das galvanoplastische Verfahren beginnen, wobei z.B. Gold als Schichtmaterial verwendet werden kann.

An den Kontaktstellen schlägt sich das Material nieder und wächst je nach Beschichtungszeit zu Erhebungen an, die säulen- und/oder stegartig ausgebildet sein können, und die im oberen Teil über die Konturen der Kontaktstellen etwas hinaustreten können.

Sollen die erste und die zweite Schicht in einem eingängigen Herstellungsverfahren erzeugt werden, so wählt man die Beschichtungszeit so lange, dass benachbarte Erhebungen zusammenwachsen und somit eine flächige zusammenhängende Struktur ergeben. Jedoch muss die galvanische Beschichtung abgebrochen werden, solange noch porenartige Oeffnungen zwischen den Erhebungen erhalten bleiben, und zwar sollen diese Poren der Stützstruktur wesentlich grösser sein als die Mikroporen der Mikrofilterfolie.

Die Kontaktstellen, die nicht mehr als 20 % der Mikrofilterfolie bedecken sollen, können isolierte Flecken oder zusammenhängende Streifen sein. Mit einem Kontaktstellenmuster, das aus Flecken besteht, lässt sich eine porösere Stützstruktur erzeugen als bei einem Streifen- oder Netzmuster. Bei letzterem lässt sich aber eine erhöhte Zugfestigkeit erreichen. Eine Kombination beider Varianten ist daher besonders vorteilhaft.

Bei einem weiteren vorteilhaften Herstellungsverfahren wird die erste und die zweite Schicht in zwei Gängen erzeugt.

Die erste Schicht wird analog zu dem vorstehend beschriebenen Verfahren hergestellt. Sodann wird auf diese Schicht Metall, z.B. Gold, aufgedampft und somit die gesamte Fläche elektrisch leitend gemacht. Anschliessend erfolgt eine zweite Lackbeschichtung und darauffolgend eine Maskenbelichtung sowie eine Entwicklung. Hierbei werden die Flächen, auf welche die zweite Schicht aufgebracht werden soll, freigelegt. Die später die Makroporen bildenden Flächen bleiben von einer Photolackschicht bedeckt. Nun kann die zweite Schicht galvanisch erzeugt werden. Vorteilhafterweise kann die Schicht aus Gold bestehen und Kontaktstellen bilden, an denen schliesslich eine Trägerstruktur durch Diffusionsschweissen angebracht werden kann.

Die Erfindung wird im folgenden anhand von in der Zeichnung dargestellten Ausführungsbeispielen erläutert.

Fig. 1a    zeigt in Aufsicht eine mit belichtetem Fotolack bedeckte Mikrofilterfolie nach der Entwicklung,

Fig. 1b    die Mikrofilterfolie nach Herstellung der zweischichtigen Stützstruktur und

Fig. 1c    die Mikrofilterfolie mit den zwei Schichten der Stützstruktur im Querschnitt.

In den Fig. 2, 3, 4a und 5a sind variante Ausführungsformen in Aufsicht und in den Fig. 4b und 5b im Querschnitt dargestellt.

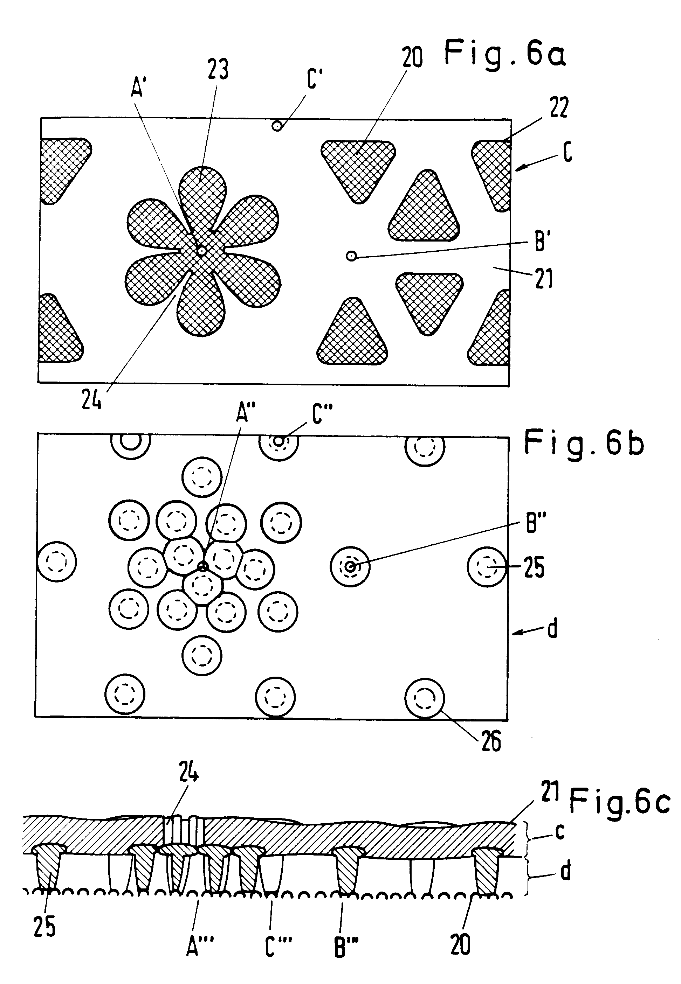

Eine weitere Ausführungsart einer zweischichtigen Stützstruktur ist in Fig. 6a in Aufsicht auf die obere zweite Schicht,
in Fig. 6b in Aufsicht auf die untere erste Schicht dargestellt, während
Fig. 6c einen Querschnitt durch die Mikrofilterfolie mit Stützstruktur zeigt.

Bei der in den Fig. 1a bis 1c dargestellten Ausführung einer Stützstruktur wird diese nach einem eingängigen Verfahren hergestellt.

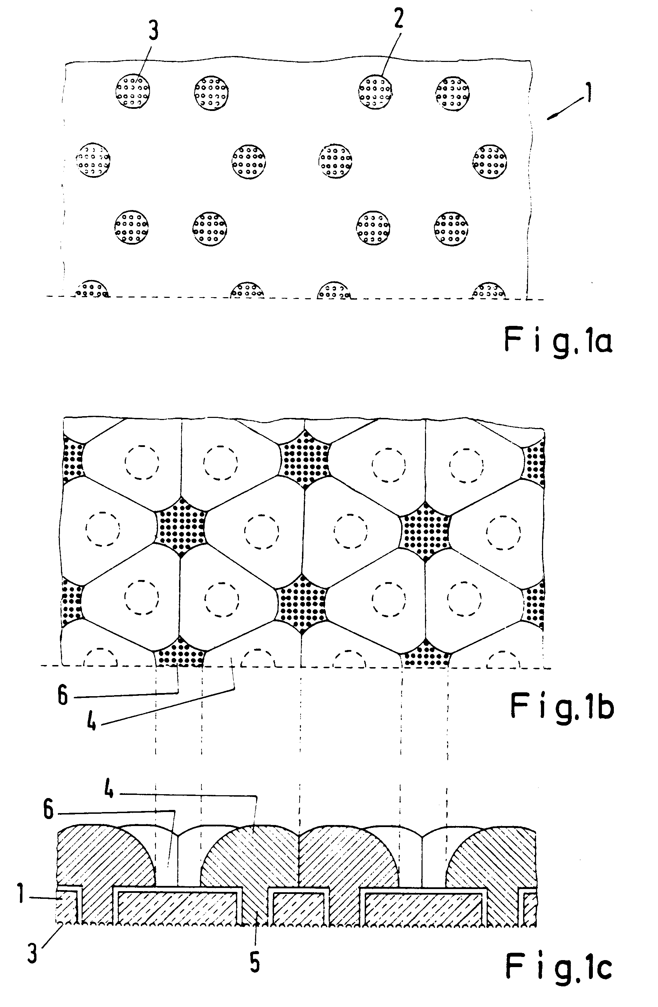

Gemäss Fig. 1a weist die lichtempfindliche Lackschicht 1 hexagonal angeordnete, kreisförmige Kontaktstellen 2 über der Mikrofilterfolie 3 nach der Maskenbelichtung auf. Nach einem entsprechenden Zeitintervall der galvanoplastischen Beschichtung haben sich über und in der nächsten Umgebung der Kontaktstellen pilzartige Einzelerhebungen 4 auf Stielen 5 ausgebildet. Zwischen den Einzelerhebungen 4 befinden sich offene Poren 6 (Fig. 1b und 1c). Hierbei bilden die Stiele die erste Schicht b und die Pilzhüte 4 die zweite Schicht a.

Nach Fertigstellung der Stützstruktur kann die Fotolackschicht in üblicher Weise herausgelöst werden.

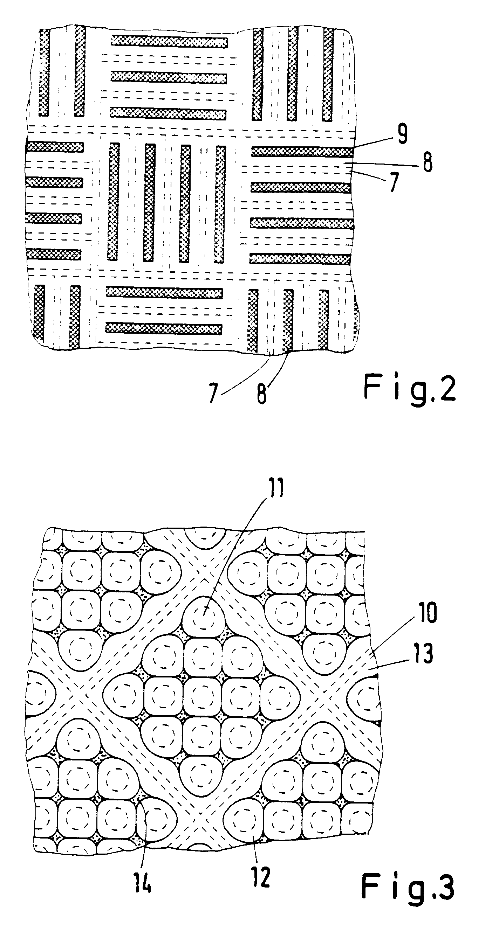

Der in Fig. 2 dargestellte Ausschnitt einer weiteren Ausführungsform zeigt eine netzartige Ausbildung von Kontaktstreifen 7, wobei sich nach Abschluss des galvanoplastischen Verfahrens stegartige, seitlich über die Konturen der Streifen sich erstreckende Erhebungen 8 gebildet haben. Die so gebildeten Poren 9 sind hierbei in einem parkettähnlichen Muster angeordnet.

Fig. 3 zeigt einen Ausschnitt einer Ausführungsform, bei welcher sowohl netzartig ausgebildete Kontaktstreifen 10 mit dazwischen orthogonal angeordneten, kreisförmigen Kontaktstellen 11 vorgesehen sind. Beim Aufbau der galvanoplastischen Schicht entstehen zuammenhängende Pilze 12, die mit den stegartigen Erhebungen 13 der Kontaktstreifen 10 ebenfalls zusammenhängen. Dazwischen sind offene Poren 14 entstanden.

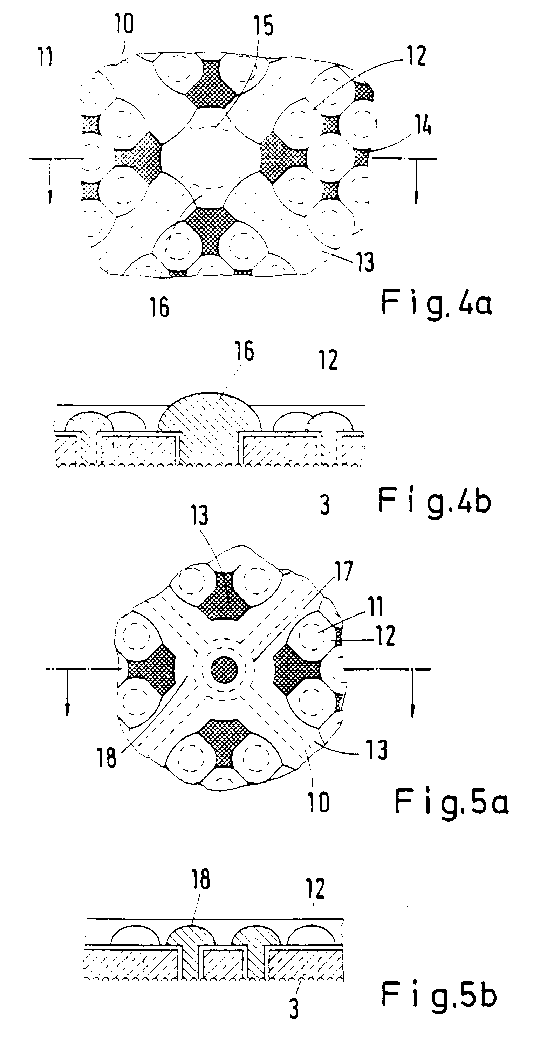

Die in den Fig. 4a und 4b dargestellte Ausführungsform ist gegenüber der Fig. 3 dadurch abgewandelt, dass an den Knotenpunkten des Netzes grosse Kontaktstellen 15 vorgesehen sind, die pilzartige Erhebungen 16 ergeben, die höher als die umgebenden Erhebungen 12 und 13 sind. Die mit Fig. 3 übereinstimmenden Elemente sind mit den gleichen Bezugsziffern bezeichnet.

Diese Ausführungsform führt zu der Möglichkeit, die zweischichtige Stützstruktur mittels Diffusionsschweissen an den Erhebungen 16 mit einer nicht dargestellten Trägerstruktur zu verbinden.

Die in den Fig. 5a und 5b gezeigte Ausführungsform ist gegenüber den Fig. 4a und 4b dahingehend abgewandelt, dass an den Knotenpunkten des Netzes die Kontaktstellen 17 ringförmig ausgebildet sind, was eine torusartige Erhebung 18 ergibt. Dieses ermöglicht eine Befestigung der Stützstruktur mit einem nicht dargestellten Filterträger mittels eines Lots. Hierzu kann das Lot in Pastenform auf die Knotenpunkte mittels Siebdruck aufgebracht werden.

Beim Löten bleibt das aufgeschmolzene Lot innerhalb des Torus 18 gefangen. Somit wird verhindert, dass die Mikroporen der Mikrofilterfolie in der Umgebung der Lötstellen durch wegfliessendes Lot verschlossen werden.

Bei der in den Fig. 6a bis 6c dargestellten Ausführung einer Stützstruktur wird diese in einem zweigängigen Verfahren hergestellt.

Die Fig. 6a bis 6c zeigen in Aufsicht eine zweite Schicht c bzw. eine erste Schicht d und eine Mikrofolie 20 mit der aufgebrachten, zweischichtigen Stützstruktur c, d. Die Gestaltung der oberen Schicht c wird mit Hilfe einer Maske mit entsprechendem Muster hergestellt. Die metallische Schicht 21 weist Makroporen 22 über der Mikrofolie 20 auf. Diese Durchtrittsöffnungen für das Filtrat können unabhängig von der Beschaffenheit der unteren Schicht d relativ gross sein. Letzteres ist vorteilhaft, da bei Verwendung eines teuren Metalls, z.B. Gold, gegenüber den in den Fig. 1a bis 5b dargestellten Ausführungsformen an Material gespart werden kann.

Im Ausführungsbeispiel sind Kontaktstellen 23 in der Schicht c zur Befestigung einer nichtdargestellen Trägerstruktur vorgesehen. Die Trägerstruktur weist spitzenförmige Erhebungen auf, die genau auf die Kontaktstellen 23 passend angeordnet sind. Die Verbindung zwischen Stützstruktur der Mikrofilterfolie und Trägerstruktur soll durch Diffusionsschweissen erfolgen. Im vorliegenden Fall sind die Kontaktstellen 23 rosettenartig ausgebildet, wobei zwischen den Rosettenblättern schmale, metallische Stege 24, die zum Mittelpunkt der Rosette weisen, vorhanden sind. Diese Ausbildungsweise hat den Vorteil, dass die bei der Diffusionsschweissung nötigen hohen Pressungen dank der geringen Berührungsfläche zwischen den Stegen 24 und den Spitzen der Trägerstruktur sich mit relativ geringen Kräften erzeugen lassen.

Ein weiterer Vorteil besteht darin, dass die Spitzen einer solchen Trägerstruktur nicht exakt gleich hoch sein müssen. Höhenunterschiede von solchen Spitzen können durch entsprechende Deformation der Stege 24 ausgeglichen werden.

Zur Anpassung an das Muster der oberen Schicht c wird ein entsprechendes Maskenmuster zur Erzeugung der unteren Schicht d gewählt. Und zwar wird diese Schicht derart ausgebildet, dass im Bereich der Kontaktstellen 23 die säulenartigen, an ihren oberen Enden sich etwas verbreiternden Erhebungen 25, 26 dichter als im übrigen Bereich angeordnet sind. Zum besseren Verständnis der dargestellten Struktur sind in den Fig. 6a bis 6c übereinanderliegende Positionen A′ bis A‴, B′ bis B‴ und C′ bis C‴ angegeben.

## Patentansprüche

1. Einrichtung zur Abstützung einer metallischen Mikrofilterfolie, wobei die Einrichtung eine galvanisch aufgebrachte, offenporige Stützstruktur ist, deren Poren wesentlich grösser als die Mikroporen der Mikrofilterfolie sind, dadurch **gekennzeichnet,** dass die Stützstruktur aus mindestens zwei, auf der Rückseite der Mikrofilterfolie aufgebrachten, porösen Schichten besteht, und dass die erste, direkt auf der Rückseite der Mikrofilterfolie aufgebrachte Schicht aus einzelnen Verbindungselementen besteht, die die Mikrofilterfolie mit der zweiten Schicht verbinden, wobei die Kontaktstellen der Verbindungselemente die Mikrofilterfolie zum grössten Teil unbedeckt lassen, und dass die zweite Schicht aus einer zusammenhängenden, Makroporen freilassenden Struktur besteht.

2. Einrichtung nach Anspruch 1, dadurch gekennzeichnet, dass die Verbindungselemente, aus denen die erste Schicht besteht, Teile von säulen- und/oder stegartigen Erhebungen sind.

3. Einrichtung nach Anspruch 2, dadurch gekennzeichnet, dass die Erhebungen an ihren oberen Enden nach allen Seiten erweitert und zu einer flächigen Struktur mit offenen Makroporen zusammengewachsen sind und so die zweite Schicht bilden.

4. Einrichtung nach Anspruch 2, dadurch gekennzeichnet, dass die zweite Schicht separat auf der ersten Schicht aufgebracht ist, wobei die zweite Schicht eine nahtlose Querverbindung zwischen den oberen Enden der Erhebungen bilden.

5. Einrichtung nach Anspruch 4, dadurch gekennzeichnet, dass die zweite Schicht Kontaktstellen für eine weitere Trägerstruktur aufweist.

6. Einrichtung nach Anspruch 5, dadurch gekennzeichnet, dass an den Kontaktstellen die Erhebungen der ersten Schicht dichter als im übrigen Bereich angeordnet sind.

7. Einrichtung nach Anspruch 5, dadurch gekennzeichnet, dass die zweite Schicht im Bereich der Kontaktstellen schmale, zum Mittelpunkt der Kontaktstellen gerichtete Stege (24) aufweist.

8. Einrichtung nach Anspruch 2, dadurch gekennzeichnet, dass die Kontaktstellen der ersten Schicht rasterartig angeordnet sind.

9. Einrichtung nach Anspruch 3, dadurch gekennzeichnet, dass die erste Schicht ein Netz von stegartigen Erhebungen (13) und innerhalb den Maschen des Netzes angeordnete säulenartige Erhebungen (12) aufweist (Fig. 3).

10. Einrichtung nach Anspruch 9, dadurch gekennzeichnet, dass sich in den Knoten des Netzes Erhebungen (16) befinden, die im Vergleich zu den übrigen Erhebungen (12) grössere Abmessungen aufweisen (Figuren 4a, 4b).

11. Einrichtung nach Anspruch 9, dadurch gekennzeichnet, dass sich in den Knoten des Netzes Erhebungen (18) befinden, die torusartig ausgebildet sind (Figuren 5a, 5b).

**Claims**

1. A device for supporting a metallic microfilter foil, the device being a galvanically applied open-pore support structure, the pores of which are substantially larger than the micropores of the microfilter foil, characterised in that the support structure consists of at least two porous layers applied to the back of the microfilter foil and in that the first layer applied directly to the back of the microfilter foil consists of individual connecting elements which connect the microfilter foil to the second layer, the contact points of the connecting elements leaving the microfilter foil largely uncovered, and in that the second layer consists of a cohesive structure which leaves macropores free.

2. A device according to claim 1, characterised in that the connecting elements of which the first layer consists are parts of projections in the form of columns and/or webs.

3. A device according to claim 2, characterised in that the projections are widened out in every direction at their top ends and have coalesced to form a flat structure with open macropores and thus form the second layer.

4. A device according to claim 2, characterised in that the second layer is applied separately to the first layer, the second layer forming a seamless transverse connection between the top ends of the projections.

5. A device according to claim 4, characterised in that the second layer has contact points for another support structure.

6. A device according to claim 5, characterised in that the projections of the first layer are disposed closer together at the contact points than the remaining area.

7. A device according to claim 5, characterised in that the second layer has, in the region of the contact points, narrow webs (24) directed towards the centre of the contact points.

8. A device according to claim 2, characterised in that the contact points of the first layer are arranged raster-fashion.

9. A device according to claim 3, characterised in that the first layer comprises a network of projections (13) in the form of webs and projections (12) in the form of columns disposed inside the meshes of the network (Fig. 3).

10. A device according to claim 9, characterised in that projections (16) having larger dimensions than the other projections (12) are provided at the junction points of the network (Figs. 4a, 4b).

11. A device according to claim 9, characterised in that projections (18) of toroidal construction are provided at the junction points of the network (Figs. 5a, 5b).

**Revendications**

1. Dispositif de support d'un microfiltre en feuille métallique, le dispositif étant une structure de support à pores ouverts, déposée par galvanisation, dont les pores sont notablement plus grands que les micropores du microfiltre en feuille, caractérisé en ce que la structure de support se compose d'au moins deux couches poreuses déposées au dos du microfiltre en feuille et en ce que la première couche déposée directement au dos du microfiltre en feuille se compose d'éléments individuels de liaison qui relient le microfiltre en feuille à la seconde couche, les lieux de contact des éléments de liaison laissant à découvert la majeure partie du microfiltre en feuille, et en ce que la seconde couche se compose d'une structure continue laissant subsister des macropores.

2. Dispositif selon la revendication 1, caractérisé en ce que les éléments de liaison dont se compose la première feuille sont des parties de protubérances en forme de colonnes et/ou de nervures.

3. Dispositif selon la revendication 2, caractérisé en ce que les protubérances sont élargies de tous les côtés à l'extrémité supérieure et forment par croissance commune une structure plane à macropores ouverts en constituant ainsi la seconde couche.

4. Dispositif selon la revendication 2, caractérisé en ce que la seconde couche est déposée séparément sur la première couche, la seconde couche formant une liaison transversale sans soudure entre les extrémités supérieures des protubérances.

5. Dispositif selon la revendication 4, caractérisé en ce que la seconde couche comporte des lieux de contact pour une autre structure de support.

6. Dispositif selon la revendication 5, caractérisé en ce que les protubérances de la première couche sont disposées de manière plus serrée aux lieux de contact que dans le reste de la zone.

7. Dispositif selon la revendication 5, caractérisé en ce que la seconde couche comporte dans la région des lieux de contact des nervures étroites (24) orientées vers le centre des lieux de contact.

8. Dispositif selon la revendication 2, caractérisé en ce que les lieux de contact de la première couche sont disposés selon une trame.

9. Dispositif selon la revendication 3, caractérisé en ce que la première couche comprend un treillis de protubérances (13) en forme de nervures et des protubérances (12) en forme de colonnes disposées dans les mailles du treillis (figure 3).

10. Dispositif selon la revendication 9, caractérisé en ce que des protubérances (16) se trouvant aux noeuds du treillis ont des dimensions supérieures à celles des autres protubérances (12) (figures 4a, 4b).

11. Dispositif selon la revendication 9, caractérisé en ce que des protubérances (18) se trouvant aux noeuds du treilles sont conformées en tores (figures 5a, 5b).

Fig.1a

Fig.1b

Fig.1c

Fig.2

Fig.3

Fig. 4a

Fig. 4b

Fig. 5a

Fig. 5b

9

Fig.6a

Fig.6b

Fig.6c